# EUROPÄISCHE PATENTSCHRIFT

(11) **EP 3 698 281 B1**
(45) Veröffentlichungstag und Bekanntmachung des Hinweises auf die Patenterteilung: **08.03.2023**
(21) Anmeldenummer: 18746865.7
(22) Anmeldetag: 19.07.2018
(51) Int. Cl.: B29D 30/00, B29D 30/72, B60C 13/00, B60C 19/00, H01Q 9/26, G06K 19/077, H01Q 1/22

(54) **VERFAHREN ZUM AUSBILDEN EINER BERÜHRUNGSLOS AUSLESBAREN IDENTIFIKATIONSEINHEIT IN EINEM REIFEN**
METHOD FOR FORMING A CONTACTLESSLY READABLE IDENTIFICATION UNIT IN A TIRE
PROCÉDÉ DE FORMATION D'UNE UNITÉ D'IDENTIFICATION LISIBLE SANS CONTACT DANS UN PNEU

(30) Priorität: 20.10.2017 DE 102017218763
(43) Veröffentlichungstag der Anmeldung: 26.08.2020
(73) Patentinhaber: Continental Reifen Deutschland GmbH, 30165 Hannover (DE)
(72) Erfinder: EHMKE, Tobias, 30419 Hannover (DE); KURZ, Martin, 30419 Hannover (DE)
(74) Vertreter: Continental Corporation
(86) Internationale Anmeldenummer: PCT/EP2018/069573
(87) Internationale Veröffentlichungsnummer: WO 2019/076500

(56) Entgegenhaltungen:
- EP-A1- 3 287 304
- WO-A1-2018/028850
- JP-B2- 4 107 381
- US-A1- 2011 000 969

## Beschreibung

Die Erfindung betrifft ein Verfahren zum Ausbilden einer berührungslos auslesbaren Identifikationseinheit, insbesondere einem RFID-Tag, in einem Reifen, insbesondere Fahrzeugreifen.

Zur Identifikation eines Reifens ist es bekannt, beispielsweise einen Barcode oder eine Nummerncodierung auf einer Seitenwand des Reifens anzubringen. Dadurch kann beispielsweise vom Automobilhersteller festgestellt werden, wo ein bestimmter Reifen hergestellt wurde bzw. welche Spezifikationen bzw. Eigenschaften der jeweilige Reifen aufweist. Über eine derartige Identifikation kann somit beispielsweise auch automatisiert ein Reifen für das jeweilige Fahrzeug ausgewählt werden.

Nachteilig bei einer derartigen Kennzeichnung ist, dass diese bei Verschmutzung schwierig abzulesen sind sowie durch die Nutzung des Reifens über die Lebenszeit beschädigt werden können, so dass eine nachträgliche Identifizierung des Reifens nicht sichergestellt werden kann.

Weiterhin sind sogenannte RFID-Tags bzw. Transponder bekannt, auf denen eine Reifen-Identifikation gespeichert werden kann. Der RFID-Tag ist hierbei in einen Identifikationsabschnitt, auf dem die Reifen-Identifikation z.B. in einem RFID-Chip hinterlegt ist, und einen Antennenabschnitt unterteilt, die miteinander zusammenwirken. Über ein entsprechendes Lesegerät kann die Reifen-Identifikation durch eine Wechselwirkung mit dem RFID-Chip über den Antennenabschnitt berührungslos erfasst werden. Um einen derartigen RFID-Tag im Reifen verwenden zu können, ist dieser in geeigneter Weise in den Reifen zu integrieren oder an diesem zu befestigen. Dabei ist zu berücksichtigen, dass der Reifen in Fahrsituationen hohen Kräften ausgesetzt ist und derartige Kräfte nicht zu einer Beschädigung oder einem Abfallen des RFID-Tags führen dürfen. Weiterhin ist die Befestigung im Hinblick darauf zu wählen, ob eine Stabilität des Reifens bzw. die Reifeneigenschaften durch ein zusätzliches Element im Reifen beeinträchtigt werden.

Demnach können derartige RFID-Tags als Folientags im Reifenaufbauprozess in den Reifen eingebracht werden, wobei der RFID-Tag dazu auf einer Folie aufgebracht ist und sich bei einer Belastung des Reifens zusammen mit der Folie verbiegen kann. Weiterhin kann vorgesehen sein, den RFID-Chip durch eine Lötverbindung oder Schweißverbindung oder Klebeverbindung mit einer Spiralantenne zu verbinden und diesen RFID-Tag in den Reifen einzubringen. Folientags weisen eine Breite von typischerweise zwischen 3mm und 20mm und eine Länge von zwischen 30mm und 90mm sowie eine Dicke von zwischen 0,1mm und 0,4mm auf. RFID-Tags mit Spiralantennen haben einen Durchmesser bzw. eine Dicke von ca. 0,5mm bis 3mm und eine Länge von zwischen 5mm und 100mm.

Um diese Arten von RFID-Tags im Reifen zu integrieren, müssen diese speziell beschichtet sein. Nur so kann gewährleistet werden, dass sich die RFID-Tags ideal mit dem sie umgebenden Material, beispielsweise Gummi, der jeweiligen Reifenlage verbinden und sich über die Belastungszeit des Reifens nicht frei arbeiten bzw. sich davon trennen. In beiden genannten Ausführungen von bekannten RFID-Tags werden dadurch zusätzliche Bauteile in den Reifen eingebracht, die Fremdkörpereigenschaften entwickeln können, so dass eine zuverlässige und vor allem dauerhafte Funktionsfähigkeit ohne eine zumindest teilweise Veränderung der Reifeneigenschaften nur schwer möglich ist.

Die JP 4 107 381 B2 und US 2011/000969 A1 offenbaren bekannte Verfahren zum Einbringen einer Indentifikationseinheit in einen Fahrzeugreifen.

Es ist daher Aufgabe der Erfindung, ein Verfahren anzugeben, mit dem in einfacher und zuverlässiger Weise eine berührungslos auslesbare Identifikationseinheit in einem Reifen ausgebildet werden kann, so dass eine Identifikation eines Reifens auch über die Lebenszeit eines Reifens ermöglicht wird, ohne dabei gleichzeitig eine Stabilität des Reifens maßgeblich zu beeinträchtigen.

Dies Aufgabe wird durch ein Verfahren nach Anspruch 1 sowie einen Reifen nach Anspruch 12 gelöst. Die Unteransprüche geben bevorzugte Weiterbildungen an.

Erfindungsgemäß ist demnach vorgesehen, eine berührungslos auslesbare Identifikationseinheit in einem Reifen derartig auszubilden, dass leitfähige Tinte bereitgestellt wird, die auf eine gummierte Oberfläche einer bereitgestellten Reifenlage derartig aufgebracht wird, dass die leitfähige Tinte an der Reifenlage haften bleibt und durch die leitfähige Tinte leitfähige Strukturen an und/oder in der Reifenlage ausgebildet werden, wobei die leitfähigen Strukturen einen Identifikationsabschnitt und/oder einen mit dem Identifikationsabschnitt zusammenwirkenden Antennenabschnitt der Identifikationseinheit zumindest teilweise ausbilden, wobei auf dem Identifikationsabschnitt eine Reifen-Identifikation hinterlegt ist. Anschließend wird zum Fertigstellen des Reifens mindestens eine weitere Reifenlage auf die bereits mit leitfähigen Strukturen versehene Reifenlage aufgebracht, so dass ein Reifen mit integrierter berührungslos auslesbarer Identifikationseinheit hergestellt werden kann.

Dadurch kann bereits der Vorteil erreicht werden, dass in individuellem Design und angepasst an den herzustellenden Reifen eine Identifikationseinheit in den Reifen integriert werden kann, ohne dass dabei die Reifeneigenschaften maßgeblich beeinträchtigt werden.

Die Reifen-Identifikation kann nach Fertigstellung des Fahrzeugreifens in einfacher Weise mit einem Lesegerät berührungslos ausgelesen werden, indem das Lesegerät insbesondere mit dem Identifikationsabschnitt über ein Eingangs-Wechselfeld berührungslos in Wirkverbindung tritt und ein durch den Identifikationsabschnitt modifiziertes reflektiertes Reflexions-Wechselfeld vom Lesegerät wieder erfasst werden kann. Durch einen Vergleich zwischen ausgesendetem Eingangs-Wechselfeld und dem reflektierten Reflexions-Wechselfeld kann berührungslos eine hinterlegte Reifen-Identifikation ausgelesen werden.

Das Hinterlegen der Reifen-Identifikation kann hierbei in unterschiedlichen Ausführungsformen erfolgen. Demnach kann in einer Ausfiihrungsform vorgesehen sein, dass die Identifikationseinheit lediglich den Identifikationsabschnitt aufweist, wobei der Identifikationsabschnitt ein Identifikationsmuster aufweist und das Identifikationsmuster durch leitfähige Kanäle ausgebildet wird, die in Abgängigkeit der Reifen-Identifikation angeordnet sind. In dem Fall wird das Identifikationsmuster also vorzugsweise vollständig durch die leitfähige Tinte ausgebildet, indem diese in Form der leitfähigen Kanäle auf die Reifenlage aufgebracht wird. Das Eingangs-Wechselfeld kann dann mit dem Identifikationsmuster in Wechselwirkung treten, wobei das Reflexionsverhalten des Identifikationsmusters, das vom Lesegerät über das Reflexions-Wechselfeld erfasst werden kann, eine Aussage über die Reifen-Identifikation erlaubt.

Vorteilhafterweise kann mit einer derartigen Identifikationseinheit ein sehr einfach aufgebauter RFID-Tag ausgebildet werden, der wenig Platz in der Reifenstruktur benötigt und zudem vollständig in einem Druckverfahren mit der leitfähigen Tinte ausgebildet werden kann. Somit sind neben der leitfähigen Tinte, die sehr dünn aufgetragen werden kann und die sich mit dem Gummimaterial der jeweiligen Reifenlage verbinden kann, keine Fremdkörper in den Reifen zu integrieren, so dass die Reifeneigenschaften nicht maßgeblich beeinträchtigt werden.

Gemäß einer Alternative kann das Hinterlegen der Reifen-Identifikation aber auch in einem als RFID-Chip ausgebildeten Identifikationsabschnitt erfolgen, wobei in dem Fall ergänzend ein Antennenabschnitt vorgesehen ist, der mit dem Identifikationsabschnitt in Wirkverbindung steht, wobei lediglich der Antennenabschnitt durch die leitfähige Tinte vorzugsweise vollständig auf der Reifenlage ausgebildet wird. Bei einem derartigen RFID-Tag kann das Hinterlegen durch ein Speichern der Reifen-Identifikation auf dem RFID-Chip erfolgen, so dass eine größere Variabilität im Hinblick auf das Hinterlegen der Reifen-Identifikation gegeben ist.

Das Eingangs-Wechselfeld kann dann über den aufgebrachten Antennenabschnitt mit dem RFID-Chip wechselwirken, indem dieses entsprechend der hinterlegten bzw. gespeicherten Reifen-Identifikation modifiziert und anschließend zurückreflektiert wird.

Der RFID-Chip kann zum Herstellen einer Wirkverbindung mit dem Antennenabschnitt eine Kontaktfläche aufweisen, wobei das Aufbringen der leitfähigen Tinte derartig erfolgt, dass der Antennenabschnitt durch eine leitfähige Verbindung über die Kontaktfläche des RFID-Chips mit diesem verbunden wird. Alternativ kann auch eine berührungslose Wirkverbindung zwischen dem RFID-Chip und dem Antennenabschnitt vorgesehen sein, indem der Antennenabschnitt beispielsweise induktiv mit dem RFID-Chip zusammenwirkt. In dem Fall wird der Antennenabschnitt mit einem gewissen Abstand zum RFID-Chip, der eine induktive Wechselwirkung erlaubt, auf die Reifenlage aufgebracht.

Das Ausbilden einer derartigen Identifikationseinheit erfolgt vorzugsweise derartig, dass der RFID-Chip an die entsprechende Position auf oder in der Oberfläche der Reifenlage gebracht wird und die leitfähige Tinte vor oder nach dem Aufbringen des RFID-Chips derartig zumindest auf die Oberfläche der Reifenlage aufgebracht wird, dass die leitfähige Tinte mit dem RFID-Chip in oben beschriebener Weise in Wirkverbindung steht.

Vorteilhafterweise kann der RFID-Chip hierbei durch die leitfähige Tinte auch stoffschlüssig mit der Reifenlage verbunden werden, indem nach dem Aufbringen der leitfähigen Tinte und bevor diese getrocknet ist der RFID-Chip aufgebracht wird. In einem anschließenden Trocknungsprozess der leitfähigen Tinte kann eine stoffschlüssige Verbindung ausgebildet werden.

Die leitfähige Tinte erhält ihre Leitfähigkeit vorteilhafterweise dadurch, dass einem entsprechend flüssigem Medium Silbernanopartikel und/oder Rußpartikel und/oder kohlenstoffbasierte Stoffe, beispielsweise Graphene und/oder Carbon-Nanotubes, zugeführt wird.

Das flüssige Medium kann hierbei derartig gewählt werden, dass im getrockneten Zustand der leitfähigen Tinte eine gewisse Elastizität vorhanden ist, die an die Eigenschaften des herzustellenden Reifens angepasst ist. Dadurch kann vorteilhafterweise erreicht werden, dass die leitfähigen Strukturen, die den Identifikationsabschnitt und/oder den Antennenabschnitt ausbilden, Zug-, Druck- und Scherbelastungen im Betrieb des Reifens standhalten können und somit eine Dauerhaltbarkeit der Identifikationseinheit ausgebildet werden kann.

Vorteilhafterweise kann die leitfähige Tinte weiterhin auf das Material der jeweiligen Reifenlage abgestimmt werden, so dass eine Haftung der leitfähigen Strukturen an der oder in der Reifenlage sicher und zuverlässig gewährleistet werden kann und auch darüber eine dauerhaltbare Verbindung und somit Funktionsfähigkeit gewährleistet werden kann.

Vorzugsweise ist weiterhin vorgesehen, dass das Aufbringen der leitfähigen Tinte auf die Oberfläche erfolgt, bevor die jeweilige Reifenlage in einem Reifenaufbauprozess auf eine Bautrommel überführt wird oder sobald sich die jeweilige Reifenlage auf der Bautrommel befindet. Somit kann in Abhängigkeit der Anforderungen im Reifenaufbauprozess eine Position für das Ausbilden der Identifikationseinheit gewählt werden, die eine gute Wartung oder Bedienbarkeit der Druckeinheit gewährleistet.

Um die leitfähigen Strukturen in geeigneter Weise auf die Oberfläche aufzubringen, so dass die Form des Identifikationsabschnittes und/oder des Antennenabschnittes ausgebildet wird, kann vorgesehen sein, dass die leitfähige Tinte gesteuert von einer Ablenkeinheit gezielt auf die Oberfläche der jeweiligen Reifenlage aufgebracht wird. Diese Ablenkeinheit kann hierbei eine Düse, aus der die in einem Tintenbehälter aufbewahrte leitfähige Tinte auf die Oberfläche geleitet wird, entsprechend einer Vorgabe gezielt parallel zur Ebene der Oberfläche der Reifenlage bewegen. Alternativ oder ergänzend kann auch direkt die leitfähige Tinte, die aus der Düse austritt, durch z.B. elektrostatische Wechselwirkung gezielt abgelenkt werden.

Die Reifenlage, auf der die Identifikationseinheit im beschriebenen Verfahren ausgebildet wird, kann hierbei im fertiggestellten Reifen beispielsweise eine Karkasse, eine Seitenwand, eine Innenschicht oder einen Laufstreifen darstellen. Aber auch beliebige andere Reifenlagen mit gummierter Oberfläche können vorgesehen sein. Die Reifenlage, die an die oberflächlich mit leitfähiger Tinte bedruckte Reifenlage angrenzt, muss hierbei nicht zwangsläufig auch eine gummierte Oberfläche aufweisen. So kann theoretisch auch ein Stahlgürtel anschließen, wobei dann sicherzustellen ist, dass dieser die oberflächlich aufgedruckte leitfähige Struktur im Betrieb des Fahrzeugreifens durch die steife Struktur des Stahlgürtels nicht abreibt.

Anhand von Ausführungsbeispielen soll die Erfindung im Folgenden näher erläutert werden. Es zeigen:
- Fig. 1: eine Schnittansicht eines Reifens mit einer Identifikationseinheit;
- Fig. 2a, 2b: Detailansichten von Identifikationseinheiten in zwei unterschiedlichen Ausführungsformen;
- Fig. 3a, 3b: Anordnungen zum Ausbilden einer Identifikationseinheit in zwei unterschiedlichen Ausführungsformen; und
- Fig. 4: ein Flussdiagramm zur Durchführung des erfindungsgemäßen Verfahrens.

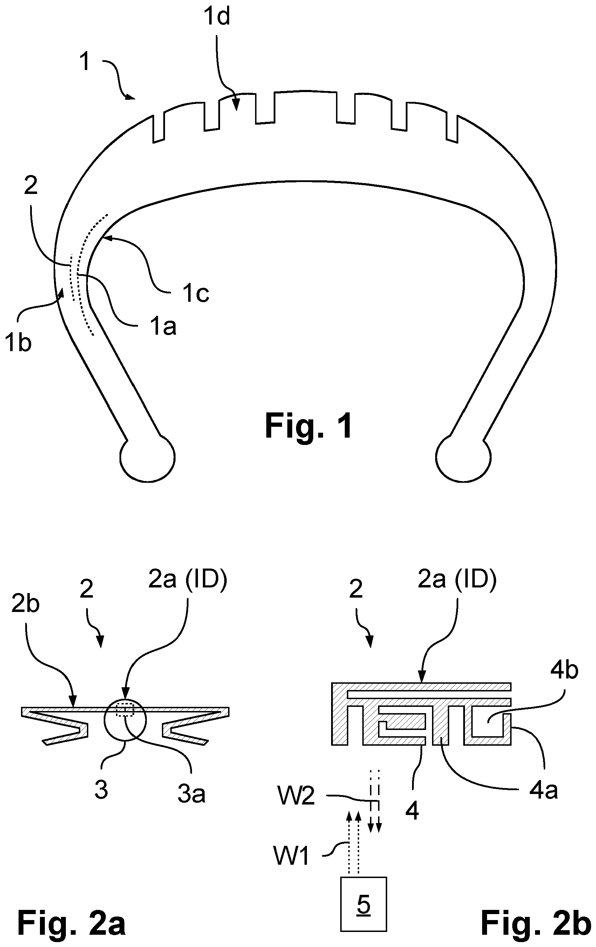

Gemäß Figur 1 ist eine Schnittansicht eines Reifens 1, insbesondere eines Fahrzeugreifens, dargestellt, wobei in einer Reifenstruktur des Reifens 1 eine Identifikationseinheit 2 angeordnet ist, wobei die Identifikationseinheit 2 in erfindungsgemäßer Weise in den Reifen 1 integriert ist. Lediglich beispielhaft ist die Identifikationseinheit 2 in Figur 1 zwischen einer Karkasse 1a und einer Seitenwand 1b des Reifens 1 angeordnet. Die Identifikationseinheit 2 kann aber beispielsweise auch zwischen einer Innenschicht 1c bzw. einer Innenisolierung des Reifens 1 und der Karkasse 1a angeordnet sein. Wie im Folgenden ausgeführt, kann die Identifikationseinheit 2 an einer beliebigen Stelle im Reifen 1 angeordnet sein, an der sich zwei Reifenlagen berühren, wobei zumindest eine der Reifenlagen eine Oberfläche aufweist, die aus einem gummiartigen Material besteht.

Die Identifikationseinheit 2 ist in zwei unterschiedlichen Ausführungsformen in den Figuren 2a und 2b in einer Detailansicht dargestellt. Die Identifikationseinheit 2 weist in beiden Ausführungsformen einen Identifikationsabschnitt 2a und in der Ausführungsform gemäß Fig. 2a zusätzlich einen Antennenabschnitt 2b auf. Die Identifikationseinheit 2 dient in beiden Ausführungsformen dem drahtlosen bzw. berührungslosen Auslesen einer Reifen-Identifikation ID, die auf dem Identifikationsabschnitt 2a entsprechend hinterlegt ist. Aus der Reifen-Identifikation ID können beispielsweise Informationen über die Herstellung des Reifens 1 oder die Eigenschaften des Reifens 1 extrahiert werden.

Um dies zu erreichen, weist der Identifikationsabschnitt 2a gemäß dem Ausführungsbeispiel in Figur 2a einen RFID-Chip 3 (radio-frequency identification), beispielsweise einen Siliziumchip, auf. Auf diesem RFID-Chip 3 ist die Reifen-Identifikation ID gespeichert. Somit entspricht die Identifikationseinheit 2 in diesem Ausführungsbeispiel einem sog. RFID-Transponder bzw. RFID-Tag. Gemäß dem Ausführungsbeispiel in Figur 2b ist der Identifikationsabschnitt 2a durch ein Identifikationsmuster 4 ausgebildet, das beispielsweise mäanderartig oder vergleichbar nach Art eines Barcodes ausgeführt sein kann und das durch leitfähige Kanäle 4a ausgebildet wird. Die Form beziehungsweise die Struktur des Identifikationsmusters 4 wird in Abhängigkeit der Reifen-Identifikation ID gewählt, so dass in diesem Identifikationsmuster 4 die Reifen-Identifikation ID hinterlegt ist. Die Identifikationseinheit 2 entspricht in diesem Ausführungsbeispiel einem sog. chiplosen RFID-Transponder bzw. chiplosen RFID-Tag ("chipless RFID").

Zum berührungslosen Auslesen der Reifen-Identifikation ID vom jeweiligen Identifikationsabschnitt 2a ist in beiden Ausführungsformen vorgesehen, mit einem Lesegerät 5, das magnetische Wechselfelder oder hochfrequente elektromagnetische Wechselfelder erzeugt, auf den jeweiligen Identifikationsabschnitt 2a einzuwirken. Demnach wird im Lesegerät 5 ein Eingangs-Wechselfeld W1 erzeugt und dieses auf die jeweilige Identifikationseinheit 2 ausgerichtet. Gemäß der Ausführungsform in Figur 2a wirkt das vom Lesegerät 5 erzeugte Eingangs-Wechselfeld W1 zunächst mit dem Antennenabschnitt 2b, der nach Art eines Dipols ausgeführt ist und der mit dem Identifikationsabschnitt 2a in Wirkverbindung steht, zusammen. Über den Antennenabschnitt 2b kann somit das vom Lesegerät 5 erzeugte Eingangs-Wechselfeld W1 auch auf den Identifikationsabschnitt 2a beziehungsweise den RFID-Chip 3 übertragen werden.

In Abhängigkeit der auf dem RFID-Chip 3 hinterlegten Reifen-Identifikation ID wird das Eingangs-Wechselfeld W1 entsprechend verändert und ein somit moduliertes bzw. verändertes Reflexions-Wechselfeld W2 zum Lesegerät 5 zurückreflektiert. Das Reflexions-Wechselfeld W2 kann vom Lesegerät 5 erfasst werden und aus einer Veränderung im Vergleich zum Eingangs-Wechselfeld W1 auf die hinterlegte Reifen-Identifikation ID geschlossen werden.

Das Auslesen der hinterlegten Reifen-Identifikation ID in der Ausführungsform gemäß Fig. 2b findet nach demselben Prinzip statt. Lediglich das Beeinflussen des Eingangs-Wechselfeldes W1 findet anders statt. Demnach wird das Eingangs-Wechselfeld W1 in Abhängigkeit des Identifikationsmusters 4 unterschiedlich reflektiert, da das Eingangs-Wechselfeld W1 auf die leitfähigen Kanäle 4a anders reagiert als auf die Zwischenräume 4b, so dass sich in Abhängigkeit der Struktur des Identifikationsmusters 4 ein bestimmtes Reflexionsverhalten, das durch das Reflexions-Wechselfeld W2 erfasst werden kann, ergibt, aus dem vom Lesegerät 5 auf die Reifen-Identifikation ID zurückgeschlossen werden kann.

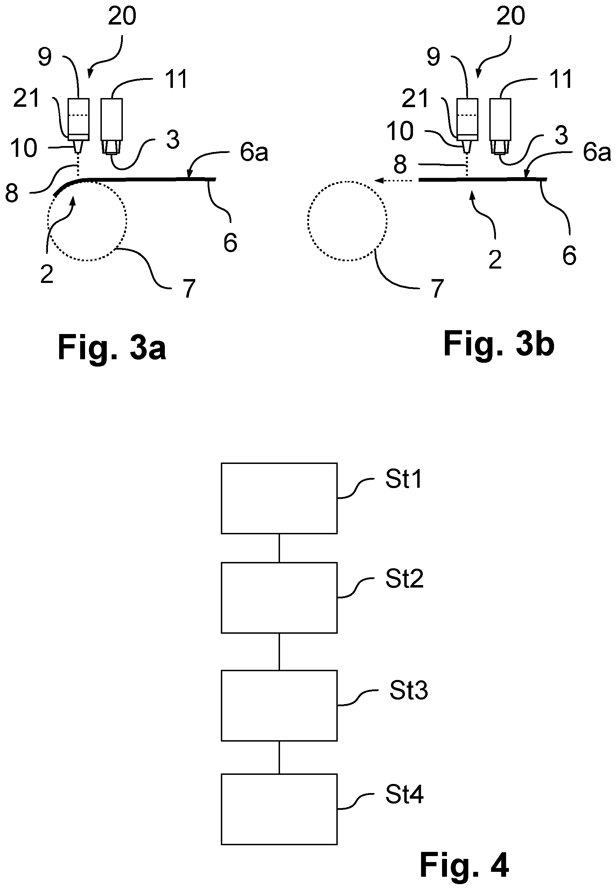

Zum Ausbilden der jeweiligen Identifikationseinheit 2 gemäß Figur 2a oder Figur 2b ist erfindungsgemäß vorgesehen, zumindest Teile der Identifikationseinheit 2 über einen Druckprozess mit einer Druckeinheit 20 direkt auf die jeweilige Reifenlage 6, die beispielsweise die Karkasse 1a, die Seitenwand 1b oder die Innenseite 1c aber auch jede beliebige andere gummiartig ausgeführte Reifenlage 6, z.B. auch ein Laufstreifen 1d, sein kann, aufzubringen:
Demnach ist gemäß Figur 3a in einer ersten Ausführungsform des Druckprozesses vorgesehen, die jeweilige Reifenlage 6, die in einem üblichen Reifenaufbauprozess auf eine drehbare Bautrommel 7 aufgelegt wird, mit einer leitfähigen Tinte 8 zu bedrucken. Dazu ist ein Tintenbehälter 9 vorgesehen, in dem die leitfähige Tinte 8 in flüssiger Form aufbewahrt ist, sowie eine Düse 10, die mit dem Tintenbehälter 9 verbunden ist. Aus dem Tintenbehälter 9 wird die leitfähige Tinte 8 über die Düse 10 auf eine Oberfläche 6a der Reifenlage 6, die sich gemäß dieser Ausführungsform auf der Bautrommel 7 befindet, gezielt aufgebracht. Dadurch kann zumindest ein Teil der Identifikationseinheit 2 direkt auf die jeweilige Reifenlage 6 aufgedruckt werden.

Dazu kann die Druckeinheit 20 eine beliebige Ablenkeinheit 21 aufweisen, mit der zumindest die Düse 10 und/oder die aus der Düse 10 austretende leitfähige Tinte 8 entsprechend derartig bewegt bzw. abgelenkt werden können, dass die leitfähige Tinte 8 auf der Oberfläche 6a der Reifenlage 6 die entsprechende Struktur, d.h. den Identifikationsabschnitt 2a und/oder den Antennenabschnitt 2b, ausbildet. Nach einem Trocknungsprozess der leitfähigen Tinte 8 kann die Struktur dann die entsprechende Funktion als Antennenabschnitt 2b bzw. Identifikationsabschnitt 2a übernehmen.

Gemäß der Ausführungsform der Identifikationseinheit 2 in Figur 2a wird vorzugsweise lediglich der Antennenabschnitt 2b auf die Oberfläche 6a der Reifenlage 6 aufgedruckt, während der RFID-Chip 3 auf die Oberfläche 6a der Reifenlage 6 aufgelegt wird, beispielweise mit einer entsprechenden Bestückungseinheit 11. Eine Wechselwirkung zwischen dem aufgedruckten Antennenabschnitt 2b und dem RFID-Chip 3 kann hierbei direkt, z.B. durch eine Kontaktierung, oder aber berührungslos, z.B. durch Induktion, erfolgen.

Demnach kann vorgesehen sein, zunächst den Antennenabschnitt 2b auf die Oberfläche 6a der Reifenlage 6 wie oben beschrieben aufzudrucken und anschließend den RFID-Chip 3 auf die noch nicht vollständig ausgetrocknete leitfähige Tinte 8 auf der Oberfläche 6a der Reifenlage 6 derartig aufzulegen, dass sich der RFID-Chip 3 mit einer Kontaktfläche 3a (s. Fig. 2a) an die leitfähige Tinte 8 anlegt und dadurch eine direkte Kontaktierung erfolgt. In einem anschließenden Trocknungsprozess der leitfähigen Tinte 8 kann sich die Kontaktfläche 3a auf dem RFID-Chip 3 fest mit dem Antennenabschnitt 2b verbinden.

Alternativ kann vorgesehen sein, den RFID-Chip 3, der wenige Millimeter dick ist, in die Oberfläche 6a der Reifenlage 6 derartig einzulassen, dass sich die Kontaktfläche 3a des RFID-Chips 3 in einer Ebene mit der Oberfläche 6a der Reifenlage 6 oder leicht darüber befindet. Anschließend kann die leitfähige Tinte 8 in Form des Antennenabschnittes 2b derartig aufgebracht werden, dass sich diese auf der Oberfläche 6a der jeweiligen Reifenlage 6 befindet sowie auch darüber hinaus in etwa derselben Ebene auf die Kontaktfläche 3a des RFID-Chips 3 ragt, so dass nach einem Trocknungsprozess ebenfalls eine mit dem RFID-Chip 3 verbundene Antenne vorliegt.

Gemäß einer weiteren Alternative kann vorgesehen sein, beispielsweise durch eine induktive Kopplung eine Wirkverbindung zwischen dem Antennenabschnitt 2b und dem RFID-Chip 3 herzustellen. Dazu kann der Antennenabschnitt 2b beispielsweise derartig aufgedruckt werden, dass dieser kreisförmig um den RFID-Chip 3 verläuft, wobei dieser auf der Oberfläche 6a der Reifenlage 6 aufliegt oder in die Oberfläche 6a der Reifenlage 6 eingelassen ist. Auf dem RFID-Chip 3 oder mit diesem verbunden kann eine entsprechend ausgebildete leitfähige Struktur vorgesehen sein, die an den in der Umgebung kreisförmig verlaufenden Antennenabschnitt 2b induktiv ankoppeln kann, so dass auch darüber vom Lesegerät 5 die Reifen-Identifikation ID, die auf dem RFID-Chip 3 hinterlegt ist, ausgelesen werden kann.

Gemäß der Ausführungsform der Identifikationseinheit 2 in Figur 2b kann der Schritt des Aufbringens des RFID-Chips 3 entfallen, da über die Druckeinheit 20 in dem Fall lediglich das Identifikationsmuster 4, das den Identifikationsabschnitt 2a ausbildet, in einer entsprechenden vorab zu definierenden Struktur aufzudrucken ist. Der Antennenabschnitt 2b ist ebenfalls nicht nötig. Demnach können Kosten gespart werden, da der RFID-Chip 3 entfällt und somit auch das Bestücken durch die Bestückungseinheit 11 nicht nötig ist. Der Druckprozess wird somit insgesamt vereinfacht.

Gemäß einer alternativen Ausführungsform des Druckprozesses ist gemäß Figur 3b vorgesehen, die Druckeinheit 20 und ggf. auch die Bestückungseinheit 11 im Reifenaufbauprozess an eine andere räumliche Position zu verlagern. Demnach ist vorgesehen, den Identifikationsabschnitt 2a und/oder den Antennenabschnitt 2b wie oben beschrieben auf die Oberfläche 6a der jeweiligen Reifenlage 6 aufzubringen bevor die Reifenlage 6 auf die Bautrommel 7 aufgelegt und darüber im späteren Reifenaufbauprozess in ihre runde Form gebracht wird.

Dadurch können bestehende Reifenaufbauanlagen mit Bautrommeln 7 im Wesentlichen unverändert bleiben und die Druckeinheit 20 und/oder die Bestückungseinheit 11 können an einer Stelle im Reifenaufbauprozess angeordnet werden, an der der Druckprozess einfacher durchgeführt werden kann. Durch die Trennung der einzelnen Herstellungsabschnitte können beispielsweise Installation, die Bedienung und die Wartung vereinfacht werden.

In beiden Varianten des Druckprozesses wird erreicht, dass die jeweiligen elektrischen Strukturen des Identifikationsabschnitts 2a beziehungsweise des Antennenabschnitts 2b mit der leitfähigen Tinte 8 individuell ausgebildet werden können, so dass ein großer Freiheitsgrad im Antennendesign besteht aber auch der Identifikationsabschnitt 2a bzw. das Identifikationsmuster 4 bei einem chiplosen RFID-Tag individuell ausgebildet werden kann. Dies kann durch eine gezielte Ansteuerung der Ablenkeinheit 21 erreicht werden, wobei diese gemäß einem bestimmten vorab geplanten Design angesteuert wird. Dadurch kann ein variabler, an den Reifen 1 beziehungsweise die jeweilige Reifenlage 6 angepasster Aufbau der jeweiligen Identifikationseinheit 2 erreicht werden, die vom jeweiligen Reifenhersteller auch selbst geplant werden kann. Dabei kann der Antennenabschnitt 2b an den jeweiligen RFID-Chip 3 und ergänzend auch das Identifikationsmuster 4 an den zur Verfügung stehenden Bereich auf der Oberfläche 6a der jeweiligen Reifenlage 6 gezielt angepasst werden. Auch die Position kann innerhalb der zur Verfügung stehenden Fläche frei gewählt werden.

Als leitfähige Tinte 8 wird dabei ein Material mit einem bestimmten Adhäsionsverhalten gewählt, das auf das gummiartige Material der jeweiligen Reifenlage 6 abgestimmt ist, so dass sich die leitfähige Tinte 8 auf der Oberfläche 6a in geeigneter Weise mit der Reifenlage 6 verbinden bzw. an dieser haften kann. Weiterhin wird die leitfähige Tinte 8 derartig optimiert, dass sie unterschiedlich belastbar ist bzw. verschiedene Elastizitäten aufweist. Dadurch kann auch im Betrieb des Reifens 1, wenn unterschiedliche Belastungen, insbesondere Zug-, Druck- und Scherbelastungen, auf den Reifen 1 bzw. die einzelnen Reifenlagen 6 wirken, eine Beschädigung der Identifikationseinheit 2 vermieden werden. Die Elastizität kann hierbei auch auf die Anwendung des jeweiligen Reifens 1, in den die Identifikationseinheit 2 integriert werden soll, abgestimmt werden.

Die leitfähige Tinte 8 wird weiterhin derartig abgestimmt, dass aufgrund deren Dicke auf der Oberfläche 6a der Reifenlage 6 nach dem Trocknungsprozess, d.h. nachdem sie eine Verbindung mit der jeweiligen Reifenlage 6 eingegangen ist, kein zu großes Volumen innerhalb des Reifens 1 in Anspruch genommen wird. Somit werden die Eigenschaften des Reifens 1 durch das Ausbilden der Identifikationseinheit 2 mit der leitfähigen Tinte 8 innerhalb des Reifens 1 nicht maßgeblich beeinträchtigt. Demnach kann sich eine weitere Reifenlage, die auf die oberflächlich mit leitfähiger Tinte 8 bedruckte Reifenlage 6 aufgelegt wird, ohne weiteres mit dieser wie in einem herkömmlichen Reifenaufbauprozess verbinden, ohne dass dies einen maßgeblichen Einfluss auf das Fahrverhalten des Reifens 1 hat.

Gemäß Figur 4 kann das Verfahren zum Ausbilden einer Identifikationseinheit 2 an einem Reifen 1 beispielsweise wie folgt ausgeführt werden:
In einem ersten Schritt St1 wird in einer Druckeinheit 20 zunächst leitfähige Tinte 8 bereitgestellt. In einem zweiten Schritt St1 wird weiterhin eine Reifenlage 6 mit einer gummierten Oberfläche 6a bereitgestellt, beispielsweise eine Reifenlage 6, die nach der Fertigstellung des Reifenaufbauprozesses eine Karkasse 1a, eine Seitenwand 1b, eine Innenschicht 1c oder einen Laufstreifen 1d ausbildet.

In einem dritten Schritt St3 wird die leitfähige Tinte 8 wie oben beschrieben über eine Düse 10 durch gezieltes Ablenken mit der Ablenkeinheit 21 derartig auf die gummierte Oberfläche 6a der Reifenlage 6 aufgebracht, dass die leitfähige Tinte 8 leitfähige Strukturen in Form des Identifikationsabschnitts 2a und/oder des Antennenabschnitts 2b der auszubildenden Identifikationseinheit 2 ausbildet. Ist eine Identifikationseinheit 2 gemäß Figur 2a vorgesehen, wird vor oder nach dem dritten Schritt St3 ergänzend der RFID-Chip 3 derartig auf die Oberfläche 6a der Reifenlage 6 aufgelegt, dass der Antennenabschnitt 2b wie oben beschrieben mit dem RFID-Chip 3 in Wirkverbindung steht.

In einem anschließenden vierten Schritt St4 wird auf die oberflächlich bedruckte Reifenlage 6 eine weitere Reifenlage 6 aufgebracht und der Reifen 1 in einem herkömmlichen Reifenaufbauprozess fertigstellt, so dass die Identifikationseinheit 2 in die Reifenstruktur integriert ist und davon geschützt wird. Dabei wird vorzugsweise gewartet, bis die leitfähige Tinte 8 auf der Oberfläche 6a der Reifenlage 6 getrocknet ist und sich somit mit der jeweiligen Reifenlage 6 fest verbunden hat. Das Aufbringen der weiteren Reifenlage 6 findet hierbei auf der Bautrommel 7 statt, mithilfe derer die einzelnen Reifenlagen 6 im Reifenaufbauprozess zu dem fertiggestellten Reifen 1 insbesondere aufgewickelt werden. Der Druckprozess kann auf der auf der Bautrommel 7 befindlichen Reifenlage 6 stattfinden oder aber bevor die Reifenlage 6 auf die Bautrommel 7 überführt wird.

### Bezugszeichenliste

- 1: Reifen
- 1a: Karkasse
- 1b: Seitenwand
- 1c: Innenschicht/Innenisolierung
- 1d: Laufstreifen
- 2: Identifikationseinheit
- 2a: Identifikationsabschnitt
- 2b: Antennenabschnitt
- 3: RFID-Chip
- 3a: Kontaktfläche des RFID-Chips 3
- 4: Identifikationsmuster
- 4a: leitfähiger Kanal
- 4b: Zwischenraum
- 5: Lesegerät
- 6: Reifenlage
- 6a: Oberfläche der Reifenlage 6
- 7: Bautrommel
- 8: leitfähige Tinte
- 9: Tintenbehälter
- 10: Düse
- 11: Bestückungseinheit
- 20: Druckeinheit
- 21: Ablenkeinheit

- ID: Reifen-Identifikation
- W1: Eingangs-Wechselfeld
- W2: Reflexions-Wechselfeld

- St1, St2, St3, St4: Schritte des Verfahrens

## Patentansprüche

1. Verfahren zum Ausbilden einer berührungslos auslesbaren Identifikationseinheit (2) in einem Reifen (1), wobei die Identifikationseinheit (2) einen Identifikationsabschnitt (2a) zum Hinterlegen einer Reifen-Identifikation (ID) aufweist, wobei die Reifen-Identifikation (ID) durch Wechselwirken eines Eingangs-Wechselfeldes (W1) mit dem Identifikationsabschnitt (2a) berührungslos ausgelesen werden kann, mit mindestens den folgenden Schritten:
- Bereitstellen von leitfähiger Tinte (8) (St1);
- Bereitstellen einer Reifenlage (6) mit einer gummierten Oberfläche (6a) (St2);
- Aufbringen der leitfähigen Tinte (8) auf die gummierte Oberfläche (6a) der Reifenlage (6) derartig, dass die leitfähige Tinte (8) an der Reifenlage (6) haften bleibt und durch die leitfähige Tinte (8) leitfähige Strukturen (2a, 4, 4a; 2b) an und/oder in der Reifenlage (6) ausgebildet werden,
wobei die leitfähigen Strukturen (2a, 4, 4a; 2b) den Identifikationsabschnitt (2a) und/oder einen mit dem Identifikationsabschnitt (2a) zusammenwirkenden Antennenabschnitt (2b) der Identifikationseinheit (2) zumindest teilweise ausbilden (St3)
**dadurch gekennzeichnet, dass**
das Aufbringen mindestens einer weiteren Reifenlage (6) auf die mit leitfähigen Strukturen (2a, 4, 4a; 2b) versehene Reifenlage (6) und ein Fertigstellen des Reifens (1) zum Ausbilden eines Reifens (1) mit integrierter berührungslos auslesbarer Identifikationseinheit (2) (St4) erfolgt.

2. Verfahren nach Anspruch 1, **dadurch gekennzeichnet, dass** die Identifikationseinheit (2) lediglich den Identifikationsabschnitt (2a) zum Hinterlegen der Reifen-Identifikation (ID) aufweist, wobei der Identifikationsabschnitt (2a) ein Identifikationsmuster (4) aufweist und das Identifikationsmuster (4) durch leitfähige Kanäle (4b) ausgebildet wird, die in Abgängigkeit der Reifen-Identifikation (ID) angeordnet sind, wobei das Identifikationsmuster durch die leitfähige Tinte (8) ausgebildet wird.

3. Verfahren nach Anspruch 1, **dadurch gekennzeichnet, dass** die Identifikationseinheit (2) den Identifikationsabschnitt (2a) und den Antennenabschnitt (2b) aufweist, wobei der Antennenabschnitt (2b) mit dem Identifikationsabschnitt (2a) in Wirkverbindung steht, wobei lediglich der Antennenabschnitt (2b) durch die leitfähige Tinte (8) ausgebildet wird.

4. Verfahren nach Anspruch 3, **dadurch gekennzeichnet, dass** der Identifikationsabschnitt (2a) durch einen RFID-Chip (3) mit einer Kontaktfläche (3a) ausgebildet wird, wobei das Aufbringen der leitfähigen Tinte (8) derartig erfolgt, dass der Antennenabschnitt (2b) durch eine leitfähige Verbindung über die Kontaktfläche (3a) oder durch eine berührungslose Wechselwirkung, beispielsweise durch Induktion, mit dem RFID-Chip (3) in Wirkverbindung steht.

5. Verfahren nach Anspruch 4, **dadurch gekennzeichnet, dass** der RFID-Chip (3) an die entsprechende Position auf oder in der Oberfläche (6a) der Reifenlage (6) gebracht wird und die leitfähige Tinte (8) vor oder nach dem Aufbringen des RFID-Chips (3) derartig zumindest auf die Oberfläche (6a) der Reifenlage (6) aufgebracht wird, dass die leitfähige Tinte (8) mit dem RFID-Chip (3) in Wirkverbindung steht.

6. Verfahren nach Anspruch 4 oder 5, **dadurch gekennzeichnet, dass** der RFID-Chip (3) durch die leitfähige Tinte (8) stoffschlüssig mit der Reifenlage (6) verbunden wird.

7. Verfahren nach einem der vorherigen Ansprüche, **dadurch gekennzeichnet, dass** die leitfähige Tinte (8) Silbernanopartikel und/oder Rußpartikel und/oder kohlenstoffbasierte Stoffe, beispielsweise Graphene und/oder Carbon-Nanotubes, aufweist zum Ausbilden ihrer Leitfähigkeit.

8. Verfahren nach einem der vorhergehenden Ansprüche, **dadurch gekennzeichnet, dass** die leitfähige Tinte (8) eine an die Eigenschaften des Reifens (1) angepasste Elastizität aufweist.

9. Verfahren nach einem der vorhergehenden Ansprüche, **dadurch gekennzeichnet, dass** die leitfähige Tinte (8) auf das Material der jeweiligen Reifenlage (6) abgestimmt wird, um eine Haftung der leitfähigen Strukturen (2a, 4, 4a; 2b) an der oder in der Reifenlage (6) zu gewährleisten.

10. Verfahren nach einem der vorhergehenden Ansprüche, **dadurch gekennzeichnet, dass** das Aufbringen der leitfähigen Tinte (8) auf die Oberfläche (6a) erfolgt, bevor die jeweilige Reifenlage (6) in einem Reifenaufbauprozess auf eine Bautrommel (7) überführt wird oder sobald sich die jeweilige Reifenlage (6) auf der Bautrommel (7) befindet.

11. Verfahren nach einem der vorhergehenden Ansprüche, **dadurch gekennzeichnet, dass** die leitfähige Tinte (8) durch eine Ablenkeinheit (21) gezielt auf die Oberfläche (6a) der jeweiligen Reifenlage (6) aufgebracht wird zum Ausbilden der leitfähigen Strukturen (2a, 4, 4a; 2b) in Form des Identifikationsabschnittes (2a) und/oder des Antennenabschnittes (2b) der Identifikationseinheit (2).

12. Reifen (1) hergestellt durch ein Verfahren nach einem der vorhergehenden Ansprüche, wobei die Identifikationseinheit (2) durch Aufbringen der leitfähigen Tinte (8) auf einer Karkasse (1a), einer Seitenwand (1b), einer Innenschicht (1c) oder einem Laufstreifen (1d) als Reifenlage (6) angeordnet ist.

## Claims

1. Method for forming a contactlessly readable identification unit (2) in a tyre (1), wherein the identification unit (2) has an identification section (2a) for storing a tyre identification (ID), wherein the tyre identification (ID) can be contactlessly read by means of an interaction between an input alternating field (W1) and the identification section (2a), comprising at least the following steps:
- providing conductive ink (8) (St1);
- providing a tyre ply (6) having a rubberized surface (6a) (St2);
- applying the conductive ink (8) onto the rubberized surface (6a) of the tyre ply (6) in such a way that the conductive ink (8) adheres to the tyre ply (6) and conductive structures (2a, 4, 4a; 2b) are formed on and/or in the tyre ply (6) by the conductive ink (8),
wherein the conductive structures (2a, 4, 4a; 2b) at least partly form the identification section (2a) and/or an antenna section (2b) of the identification unit (2), said antenna section interacting with the identification section (2a) (St3),
**characterized in that**
applying at least one further tyre ply (6) onto the tyre ply (6) provided with conductive structures (2a, 4, 4a; 2b) and completing the tyre (1) in order to form a tyre (1) with an integrated contactlessly readable identification unit (2) (St4) are carried out.

2. Method according to Claim 1, **characterized in that** the identification unit (2) only has the identification section (2a) for storing the tyre identification (ID), wherein the identification section (2a) has an identification pattern (4) and the identification pattern (4) is formed by conductive channels (4b) arranged in a manner dependent on the tyre identification (ID), wherein the identification pattern is formed by the conductive ink (8).

3. Method according to Claim 1, **characterized in that** the identification unit (2) has the identification section (2a) and the antenna section (2b), wherein the antenna section (2b) is operatively connected to the identification section (2a), wherein only the antenna section (2b) is formed by the conductive ink (8).

4. Method according to Claim 3, **characterized in that** the identification section (2a) is formed by an RFID chip (3) having a contact pad (3a), wherein applying the conductive ink (8) is carried out in such a way that the antenna section (2b) is operatively connected to the RFID chip (3) by a conductive connection via the contact pad (3a) or by a contactless interaction, for example by induction.

5. Method according to Claim 4, **characterized in that** the RFID chip (3) is brought to the corresponding position on or in the surface (6a) of the tyre ply (6) and, before or after applying the RFID chip (3), the conductive ink (8) is applied at least onto the surface (6a) of the tyre ply (6) in such a way that the conductive ink (8) is operatively connected to the RFID chip (3).

6. Method according to Claim 4 or 5, **characterized in that** the RFID chip (3) is cohesively connected to the tyre ply (6) by the conductive ink (8).

7. Method according to any of the preceding claims, **characterized in that** the conductive ink (8) comprises silver nanoparticles and/or carbon black particles and/or carbon-based substances, for example graphene and/or carbon nanotubes, in order to form its conductivity.

8. Method according to any of the preceding claims, **characterized in that** the conductive ink (8) has an elasticity that is adapted to the properties of the tyre (1).

9. Method according to any of the preceding claims, **characterized in that** the conductive ink (8) is coordinated with the material of the respective tyre ply (6) in order to ensure an adhesion of the conductive structures (2a, 4, 4a; 2b) on or in the tyre ply (6).

10. Method according to any of the preceding claims, **characterized in that** applying the conductive ink (8) onto the surface (6a) is carried out before the respective tyre ply (6) is transferred to a building drum (7) in a tyre building process or as soon as the respective tyre ply (6) is situated on the building drum (7).

11. Method according to any of the preceding claims, **characterized in that** the conductive ink (8) is applied onto the surface (6a) of the respective tyre ply (6) in a targeted manner by a deflection unit (21) in order to form the conductive structures (2a, 4, 4a; 2b) in the form of the identification section (2a) and/or the antenna section (2b) of the identification unit (2).

12. Tyre (1) produced by a method according to any of the preceding claims, wherein the identification unit (2) is arranged by applying the conductive ink (8) on a carcass (1a), a side wall (1b), an inner layer (1c) or a tread (1d) as tyre ply (6).

## Revendications

1. Procédé de formation d'une unité d'identification (2), pouvant être lue sans contact, dans un pneumatique (1), l'unité d'identification (2) comportant une portion d'identification (2a) destinée à mémoriser une identification de pneumatique (ID), l'identification de pneumatique (ID) pouvant être lue sans contact par interaction d'un champ alternatif d'entrée (W1) avec la portion d'identification (2a), le procédé comprenant au moins les étapes suivantes :
- fournir une encre conductrice (8) (St1) ;
- fournir un pli de pneumatique (6) comportant une surface caoutchoutée (6a) (St2) ;
- appliquer l'encre conductrice (8) sur la surface caoutchoutée (6a) du pli de pneumatique (6) de manière à ce que l'encre conductrice (8) adhère au pli de pneumatique (6) et à ce que des structures conductrices (2a, 4, 4a ; 2b) sont formées par l'encre conductrice (8) sur et/ou dans le pli de pneumatique (6),
les structures conductrices (2a, 4, 4a ; 2b) formant au moins partiellement la portion d'identification (2a) et/ou une portion d'antenne (2b) de l'unité d'identification (2) qui interagit avec la portion d'identification (2a) (St3),
**caractérisé en ce que**
l'application d'au moins un autre pli de pneumatique (6) sur le pli de pneumatique (6) pourvu de structures conductrices (2a, 4, 4a ; 2b) et une finition du pneumatique (1) sont effectuées pour former un pneumatique (1) comprenant une unité d'identification intégrée (2) (St4).

2. Procédé selon la revendication 1, **caractérisé en ce que** l'unité d'identification (2) comporte seulement la portion d'identification (2a) destinée à mémoriser l'identification de pneumatique (ID), la portion d'identification (2a) comportant un motif d'identification (4) et le motif d'identification (4) étant formé par des canaux conducteurs (4b) qui sont disposés en fonction de l'identification de pneumatique (ID), le motif d'identification étant formé par l'encre conductrice (8).

3. Procédé selon la revendication 1, **caractérisé en ce que** l'unité d'identification (2) comporte la portion d'identification (2a) et la portion d'antenne (2b), la portion d'antenne (2b) étant reliée fonctionnellement à la portion d'identification (2a), seule la portion d'antenne (2b) étant formée par l'encre conductrice (8).

4. Procédé selon la revendication 3, **caractérisé en ce que** la portion d'identification (2a) est formée par une puce RFID (3) pourvue d'une surface de contact (3a), l'application de l'encre conductrice (8) étant effectuée de telle sorte que la portion d'antenne (2b) soit reliée fonctionnellement à la puce RFID (3) par une liaison conductrice par le biais de la surface de contact (3a) ou par interaction sans contact, par exemple par induction.

5. Procédé selon la revendication 4, **caractérisé en ce que** la puce RFID (3) est amenée à la position correspondante sur ou dans la surface (6a) du pli de pneumatique (6) et, avant ou après l'application de la puce RFID (3), l'encre conductrice (8) est appliquée au moins sur la surface (6a) du pli de pneumatique (6) de manière à ce que l'encre conductrice (8) soit reliée fonctionnellement à la puce RFID (3).

6. Procédé selon la revendication 4 ou 5, **caractérisé en ce que** la puce RFID (3) est reliée par liaison de matière au pli de pneumatique (6) par l'encre conductrice (8).

7. Procédé selon l'une des revendications précédentes, **caractérisé en ce que** l'encre conductrice (8) comporte des nanoparticules d'argent et/ou des particules de suie et/ou des matières à base de carbone, par exemple du graphène et/ou des nanotubes de carbone, pour réaliser sa conductivité.

8. Procédé selon l'une des revendications précédentes, **caractérisé en ce que** l'encre conductrice (8) présente une élasticité adaptée aux propriétés du pneumatique (1).

9. Procédé selon l'une des revendications précédentes, **caractérisé en ce que** l'encre conductrice (8) est adaptée au matériau du pli de pneumatique respectif (6) afin d'assurer l'adhérence des structures conductrices (2a, 4, 4a ; 2b) sur ou dans le pli de pneumatique (6).

10. Procédé selon l'une des revendications précédentes, **caractérisé en ce que** l'application de l'encre conductrice (8) est effectuée sur la surface (6a) avant que le pli de pneumatique respectif (6) ne soit transféré sur un tambour de construction (7) dans un processus de construction de pneumatique ou dès que le pli de pneumatique respectif (6) se trouve sur le tambour de construction (7).

11. Procédé selon l'une des revendications précédentes, **caractérisé en ce que** l'encre conductrice (8) est appliquée de manière ciblée sur la surface (6a) du pli de pneumatique respectif (6) par une unité de déflexion (21) pour former les structures conductrices (2a, 4, 4a ; 2b) sous la forme de la portion d'identification (2a) et/ou de la portion d'antenne (2b) de l'unité d'identification (2).

12. Pneumatique (1) réalisé par un procédé selon l'une des revendications précédentes, l'unité d'identification (2) étant disposée sous la forme d'un pli de pneumatique (6) par application de l'encre conductrice (8) sur une carcasse (1a), un flanc (1b), une couche intérieure (1c) ou une bande de roulement (1d).
